Europäisches Patentamt

European Patent Office

Office européen des brevets

(11) Publication number: **0 202 408 B1**

# EUROPEAN PATENT SPECIFICATION

(45) Date of publication of patent specification: **29.07.92**

(51) Int. Cl.5: **G08B 5/22**, G08B 3/10, H04Q 7/04, H04B 5/04

(21) Application number: **86103305.8**

(22) Date of filing: **12.03.86**

(54) **A paging system, particularly for hotels.**

(30) Priority: **15.03.85 IL 74610**

(43) Date of publication of application:
**26.11.86 Bulletin 86/48**

(45) Publication of the grant of the patent:
**29.07.92 Bulletin 92/31**

(84) Designated Contracting States:
**AT BE CH DE FR GB IT LI LU NL SE**

(56) References cited:
**DE-A- 2 259 672**
**DE-B- 2 356 529**
**FR-A- 2 291 553**

**FUNKSCHAU, no. 10, 1961, "Drahtlose Personenrufanlage mit Tonfrequenz-Ruf" FRANZIS-VERLAG, München**

(73) Proprietor: **Maimon, Rambam**
**4 Zahal Street**
**Zichron Jaakov(IL)**

(72) Inventor: **Maimon, Rambam**
**4 Zahal Street**
**Zichron Jaakov(IL)**

(74) Representative: **Blumbach Weser Bergen Kramer Zwirner Hoffmann Patentanwälte Sonnenberger Strasse 100 W-6200 Wiesbaden(DE)**

## Description

## BACKGROUND OF THE INVENTION

The present invention relates to a system for establishing communication between a central station and any individual out of a selected group of subjects present within a defined area. More particularly, the invention concerns a paging system wherein from a central station messages can be broadcast to a preselected holder of a receiver device which by a certain signal such as a beep can be alerted that his presence is required at a certain location or that he must reach for the nearest telephone.

Still more specifically, the system according to the present invention is tailormade for use in hotels, as will be apparent from the description hereinbelow.

Paging systems of the kind referred to above are commonly used in hospitals, industrial plants, airports, and the like, wherein key personnel members are equipped with a small, clip-mounted receiver, which is responsive, within the range of the premises, to a radio signal transmitted by a central station. There are various degrees of sophistication of the receivers used, namely, for one-way reception, whereby only a beep or an audio message can be produced, or two-way transceivers which allow an answer-back signal by the recipient or even a conversation to take place.

Focusing now on the specific circumstances usually prevailing in hotels, certain particularities should be taken into account. Concerning a guest staying in the hotel, there are mainly three possibilities: That he is in his room and willing to take outside calls; that he is located in his room but must not be disturbed; that he is outside his room but still within the hotel premises and again willing/unwilling to answer calls; and that he left the hotel and is therefore not available.

Another characteristic fact, which this invention makes use of, is that every guest is provided with a key to his room which, customarily, goes together with a relatively largesize and heavy keyholder.

Now, as known, at the reception desk of all hotels there is provided a pigeonhouse-like structure with numbers of the rooms thereon, each pigeon-hole is adapted to accommodate a keyholder. Guests are requested to leave the keyholder with the receptionist when leaving the hotel. Therefore, the presence or absence of a keyholder within its pigeonhole is a first-hand indication of the availability of the guest for outside telephone calls or visitors. The procedure, therefore, is such that when a guest is requested on the phone, the telephone operator - situated as a rule remotely of the reception desk - first dials the room number. If no answer is received, the operator will refer the call to the receptionist desk, where, by a glance at the keyholders depositing structure, the clerk can tell whether the guest presumably left the hotel, namely, when the keyholder was returned to its place. In the case that the keyholder has not been deposited, there may be the possibility that the guest is somewhere else in the hotel, say in the dining room or swimming pool, and the clerk would ask whether he should announce the guest's name on the loudspeaker. Then either the guest is located or not.

Further it is known a wireless person paging system disclosed in the journal "Funkschau", no. 10, 1961, page 271, wherein receiving devices being not used can be deposited in numbered pigeonholes to indicate persons absence. Each pigeonhole is provided with a switch coupled to a service board. Once a receiving device is placed into a pigeonhole the switch is closed and transmit the person absent signal to the service board. So an operator is able to notice whether a person is present or absent. It is a drawback of this system that no specical requests of guests, such as instructions not to be disturbed by incoming calls can be satisfied.

It is therefore a major object of the present invention to overcome the inherent deficiencies of the present guest-paging procedures in hotels.

It is a further object of the invention to provide telecommunication or transceiver-based paging systems for hotels, but such that will be less sophisticated--and therefore less expensive--first.

It is a still further object of the invention to make use of the guest's keyholders as a receiving unit of the paging system.

It is a still further object of the present invention to utilize the presence/absence of a keyholder, within any of the existing pigeonhouse structure chambers, as automatic indicating means for informing the telephone operator of the availability of the guest whose location is required.

It is a still further object of the invention to make use of dummy keyholders as means of information satisfying specific requirements of the guests.

By obtaining any and all of the above-listed objects, a paging system is provided that will satisfy almost completely the requirements of most hotels without large investments in equipment, installation, and specially-trained personnel.

## SUMMARY OF THE INVENTION

According to a broad aspect of the invention, there is provided a paging system, particularly for hotels which include a reception station and a remotely located telephone switchboard station.

The reception station is provided with a pigeonhouse-like structure for storing the hotel room keyholders within numbered pigeonholes deposited by the hotel guests. The system comprises a first indicating means associated with the said structure for indicating the presence/absence of a keyholder in/from any of the pigeonholes of the said structure, a second indicating means associated with the telephone switchboard station, and coupled to the said first indicating means, for reproducing the indication of the first indicating means. Transceiver means are provided, operable from the switchboard station for transmitting paging radio signals to receiver means installed in the keyholders. Audio signal emitting means are installed in the keyholders, responsive to the said radio signals for alerting the inquired guest. The system is characterized by means for selectively enabling the first indicating means so that the indication of the presence of a keyholder can be disabled for any of the pigeonholes. According to a further, optional feature of the invention, dummy keyholders may be used, to be located within their respective chambers in special cases where a guest is, in fact, at the hotel but wishes not to be disturbed. These dummy keyholders will operate the switching means (or be viewed by the T.V. camera) giving thereby an indication as if the guest has left the hotel (although the "real" keyholder is in his possession).

The first indicating means may comprise a normally open switch, adapted to be closed by the weight of the keyholder, thereby actuating a corresponding sign on a display board constituting the said second indicating means, or it may comprise a T.V. camera device coupled to a monitor that gives the telephone operator a reproduced picture of the pigeonhouse structure, or any selected pigeonhole thereof.

BRIEF DESCRIPTION OF THE DRAWINGS

For better understanding the essence of and the features as well as advantages of the present invention, reference shall be made to one out of many possible examples embodying the invention given in an unlimiting way, with reference to the accompanying drawings, wherein:

Figs. 1a-1b are general, schematic views of a receptionist counter and a telephone switchboard station of a hotel;

Fig. 2 shows a keyholder with receiver and beeper provided according to the present invention; and

Fig. 3 is a section through a pair of pigeonholes of the keyholders storing structure.

DESCRIPTION OF THE PREFERRED EMBODIMENT

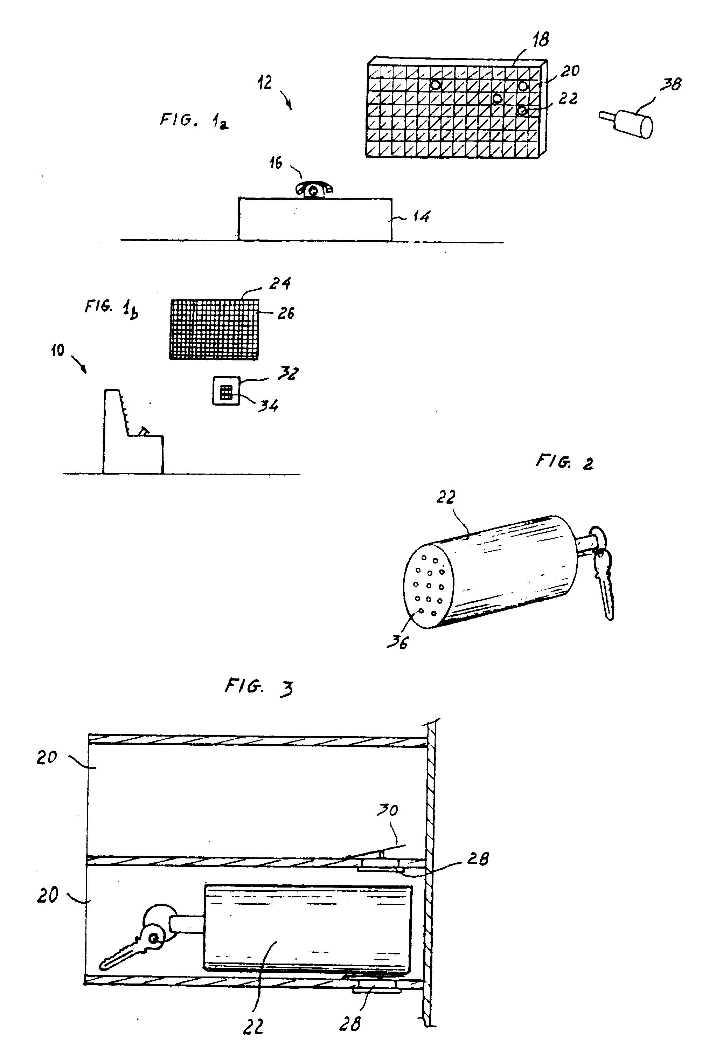

In Fig. 1, there is shown a telephone switchboard station generally indicated 10, and a (remotely located) reception station 12 comprising a counter 14, a telephone set 16 and the conventional pigeonhouse-like structure 18 comprised of a plurality of numbered pigeonholes 20 wherein keyholders 22 (Fig. 2) are left in the absence of the respective guest. All these form part-and-parcel of every conventional hotel and need not be described in further detail.

According to the invention, however, there are introduced the following additions and changes in the conventional system. Next to the telephone operator desk there is provided a display board 24 divided into numbered display sections 26 corresponding to the pigeonholes 20 of the structure 18.

The board 24 may be comprised of windows with LED devices positioned in each section and suitably coupled to their respective pigeonholes 20. Actuation of each device is controlled by a microswitch device 28 installed within each compartment 20, the arrangement being such that placing of a keyholder 22 within the compartment closes the microswitch 28, e.g. by means of a lever 30. When the keyholder 22 is withdrawn, the switch resumes its open position. Of course, other modes of operation may be utilzed, such as photocells and the like proximity detector devices.

Alternatively, rather than a separate display board, a digital or the like display system may be incorporated in the telephone switchboard, suitably coupled to the switches (or eqvivalent devices) 28, so that the operator may directly communicate with any preselcted compartment 20 and ascertain the status thereof in the above-mentioned regard.

The telephone operator's station 10 is further provided with a transceiver unit 32 (which, again may form part of the switchboard) adapted to transmitt coded radio signals, e.g. by push-button keyboard 34, which radio signals are adapted to be received and operate receiver devices installed within the keyholders 22 provided, of course, that the keyholder is located within the range of the transceiver 32. The keyholder receiver (not shown) may be of the most simple type, namely, adapted to emit a beep-type audio signal (through openings 36 at the cap-portion of the holder 22) upon receiving the coded radio signal, may enable the reception of a spoken message or allow a two-way conversation.

In an alternative form encompassed by the instant invention, there may be provided a T.V. camera 38 monitoring the structure 18 in a closed circuit, whereby the board 24 - in form of a monitor screen - will be an exact reproduction of the actual frontal view of the keyholder structure, readily observed by the telephone operator. If necessary, suitable control means may be provided for zooming the camera 38 to attain a better view of any selected portion of the keyholder housing 18.

The operation of the system will now be briefly explained: Should an incoming call be received by the operator, asking for a certain guest, the operator will be able, at a glance, to tell whether the guest is available or not, by ascertaining the keyholder presence within or absence from its pigeonhole. If the keyholder has been deposited, the operator will only have to ask whether to leave a message, and if the answer is in the affirmative, to refer the call to the reception desk 12; if no message is to be left, the receptionist will not have to be bothered at all.

Should the respective pigeonhole of the required guest be vacant, the operator will assume that the guest is in his room and dial its number. If no answer is received, and the inquiring party insists upon, the operator will transmit a locating signal by its transmitter 32 whereby the guest, wherever he may be around the hotel premises, becomes advised that he is required to reach for the nearest telephone. This procedure is known from the above mentioned "Funkschau"- article and will, of course, save the inconvenient and disturbing loudspeaker announcing paging method through the reception personnel.

The paging system as so far described can not yet be used to satisfy special requests of guests, such as instructions not to be disturbed by incoming calls - including visitors - despite being around in their rooms or elsewhere on the hotel premises. This will be effectively achieved by one or the other of the following methods. First, the switch 28 may be externally unabled, i.e. as if a keyholder has been deposited, and thereby the telephone operator will receive a sign representing that the guest is not available.

Alternatively, there may be used dummy keyholders, say, of different color or shape, that will be placed within the respective pigeonholes 20 to operate the switches 28. This will indicate to the telephone operator and to the reception clerk that the guest is, in fact, at the hotel but wishes not to receive telephone calls and/or visitors.

It has thus been established that by most simple means, an especially suitable and effective paging system for hotels is achieved which, no doubt, will payback the costs of its investment very quickly in terms of saved manpower, time, and better service to the hotel guests.

Having thus described the invention with particular reference to the preferred embodiments thereof, it will be obvious to those skilled in the art to which the invention pertains, that various changes and modifications may be made therein without departing from the scope of the invention, as defined by the claims appended hereto. Thus, for example, the novel paging system may be applied to industrial plants or offices as combined means for indicating and/or recording the arrivals and leave of workmen (for the manpower department purposes), and locating same when required. In those cases, a suitable article other than a keyholder - say, a pen-like object - will be used.

As will also be readily understood, battery charging means may be incorporated in each compartment of the pigeonhouse structure for maintaining the power of the receivers while the keyholders are stored.

## Claims

1. A paging system, particularly for hotels, including a reception station (12) and a remotely located telephone switchboard station (10), the reception station (12) being provided with a pigeonhouse-like structure (18) for storing the hotel room keyholders (22) deposited by the hotel guests within numbered pigeonholes (20), the system further comprising
   - first indicating means (28, 30; 38) associated with the said structure (18) for indicating the presence/absence of a keyholder (22) in/from any of the pigeonholes (20) of the said structure;
   - second indicating means (24, 26) associated with the telephone switchboard station (10), and coupled to the said first indicating means (20, 30; 38) for reproducing the indication of the first indicating means (28, 30; 38) ;
   - transceiver means (32) operable (34) from the switchboard station for transmitting paging radio signals;
   - receiver means installed in the said keyholders (22), responsive to the said radio signals; and
   - audio signal emitting means installed in the said keyholders (22), responsive to the said radio signals,
   characterized by -
   means for selectively enabling the first indicating means (28, 30; 38) so that the indication of the presence of a keyholder can be disabled for any of the pigeonholes (20).

2. System as claimed in Claim 1, characterized in that the said enabling means comprise a dummy keyholder.

3. System as claimed in Claim 1 or 2, characterized in that the first indicating means comprise a normally open switch (28) adapted to be closed by the weight of the keyholder (22) and the second indicating means comprise a display board (24), each switch (28) being coupled to a section of said display board (24) for making/breaking an electrical circuit comprising an illuminating device.

4. System as claimed in Claim 1 or 2, characterized in that the first indicating means comprise a T.V. camera (38) device and the second indicating means comprise a monitor on which the frontal image of the said pigeonhouse structure (18) is reproduced.

**Revendications**

1. Système de recherche de personnes, particulièrement pour les hôtels, comprenant un poste de réception (12) et un poste de standard téléphonique situé à distance , le poste de réception (12) étant équipé d'une structure du type casier à clés (18) pour emmagasiner des porte-clés de chambre d'hôtel (22) déposés par les clients de l'hôtel dans des cases (20) numérotées, le système comprenant en outre :

un premier moyen d'indication (28, 30 ; 38) associé avec ladite structure (18) pour indiquer la présence ou l'absence d'un porte-clé (22) dans l'une quelconque des cases (20) de ladite structure ;

un second moyen d'indication (24, 26) associé avec le poste de standard téléphonique (10), et couplé audit premier moyen d'indication (20, 30 ; 38) pour reproduire l'indication du premier moyen d'indication (28, 30 ; 38);

un moyen d'émission (32) manoeuvrable (34) à partir du poste de standard pour émettre des signaux radio de recherche de personnes ;

un moyen récepteur installé dans lesdits porte-clés (22), sensible auxdits signaux radio ; et

un moyen d'émission de signal sonore installé dans lesdits porte-clés (22), sensible auxdits signaux radio ;

caractérisé par un moyen pour activer de manière sélective le premier moyen d'indication (28, 30 ; 38) de manière à ce que l'indication de la présence d'un porteclés puisse être désactivée pour l'une quelconque des cases (20).

2. Système selon la revendication 1, caractérisé en ce que ledit moyen d'activation comprend un porte-clés factice.

3. Système selon la revendication 1 ou la revendication 2, caractérisé en ce que le premier moyen d'indication comprend un contacteur normalement ouvert (28) conçu pour être fermé par le poids du porte-clés (22) et en ce que le second moyen d'indication comprend un tableau d'affichage (24), chaque contacteur (28) étant relié à une partie dudit tableau d'affichage pour fermer ou ouvrir un circuit électrique comprenant un dispositif d'illumination.

4. Système selon la revendication 1 ou la revendication 2, caractérisé en ce que le premier moyen d'indication comprend un dispositif de caméra de télévision (38) et en ce que le second moyen d'indication comprend un écran de contrôle sur lequel l'image frontale de ladite structure de casier à clés (18) est reproduite.

**Patentansprüche**

1. Personenrufanlage, insbesondere für Hotels, mit einem Empfang (12) und einer entfernt angeordneten Telefonvermittlungszentrale (10), wobei der Empfang (12) mit einer Ablagefachanordnung (18) zur Aufnahme der von den Hotelgästen abgegebenen Hotelzimmer-Schlüsselanhänger (22) in numerierten Ablagefächern (20) ausgestattet ist, ferner mit

einer ersten, der Ablagefachanordnung (18) zugeordneten Anzeigeeinrichtung (28, 30; 38) zur Anzeige der An- oder Abwesenheit eines Schlüsselanhängers (22) in jedem der Ablagefächer (20),

einer zweiten, der Telefonvermittlungszentrale (10) zugeordneten Anzeigeeinrichtung (24, 26), die mit der ersten Anzeigeeinrichtung (28, 30; 38) verbunden ist und die Anzeige der ersten Anzeigeeinrichtung reproduziert, einer Sende-Empfangs-Einrichtung (32), die von der Telefonvermittlungszentrale betätigbar (34) ist, um Funkrufsignale auszusenden,

eine in den Schlüsselanhängern (22) eingebaute, auf die Funksignale ansprechende Empfangseinrichtung und eine in den Schlüsselanhängern (22) eingebaute, auf die Funksignale ansprechende Tonsignal-Abstrahleinrichtung, gekennzeichnet durch

eine Einrichtung zur selektiven Betätigung der ersten Anzeigeeinrichtung (28, 30; 38), derart, daß die Anzeige für die Anwesenheit eines Schlüsselanhängers für jedes der Ablagefächer (20) abgeschaltet werden kann.

2. Anlage nach Anspruch 1, dadurch gekennzeichnet, daß die Betätigungseinrichtung einen Blind-Schlüsselanhänger umfaßt.

3.    Anlage nach Anspruch 1 oder 2, dadurch gekennzeichnet, daß die erste Anzeigeeinrichtung einen normalerweise offenen Schalter (28) umfaßt, der durch das Gewicht des Schlüsselanhängers (22) geschlossen werden kann, daß die zweite Anzeigeeinrichtung ein Anzeigefeld (24) aufweist und daß jeder Schalter (28) mit einem Abschnitt des Anzeigefeldes (24) verbunden ist, um einen eine Leuchteinrichtung umfassenden elektrischen Stromkreis zu schließen oder zu öffnen.

4.    Anlage nach Anspruch 1 oder 2, dadurch gekennzeichnet, daß die erste Anzeigeeinrichtung eine Fernsehkamera (38) und die zweite Anzeigeeinrichtung einen Monitor umfassen, auf dem die Frontansicht der Ablagefachanordnung (18) wiedergegeben wird.

FIG. 1a

FIG. 1b

FIG. 2

FIG. 3